# EUROPÄISCHE PATENTSCHRIFT

(11) **EP 2 369 913 B1**
(45) Veröffentlichungstag und Bekanntmachung des Hinweises auf die Patenterteilung: **19.12.2012**
(21) Anmeldenummer: 09759656.3
(22) Anmeldetag: 30.10.2009
(51) Int. Cl.: A01K 1/015

(54) **BEHEIZBARER BODEN FÜR VIEHSTÄLLE**
HEATABLE FLOOR FOR LIVESTOCK STALLS
PLANCHER CHAUFFANT POUR ÉTABLES

(30) Priorität: 04.11.2008 DE 102008055777
(43) Veröffentlichungstag der Anmeldung: 05.10.2011
(73) Patentinhaber: MIK INTERNATIONAL AG, 56427 Siershahn (DE)
(72) Erfinder: ERTEL, Thomas, 37603 Holzminden (DE); WEBER-MONECKE, Johannes, 57627 Hachenburg (DE); FRANK, Roland, 59174 Kamen-Heeren (DE); MENNE, Andreas, 58730 Fröndenberg (DE); DREES, Werner, 59457 Werl (DE)
(74) Vertreter: Behrendt, Arne
(86) Internationale Anmeldenummer: PCT/EP2009/007788
(87) Internationale Veröffentlichungsnummer: WO 2010/051944

(56) Entgegenhaltungen:
- EP-A- 1 488 692
- DE-U1-202007 009 508
- US-B1- 6 622 652

## Beschreibung

Die Erfindung betrifft einen beheizbaren Boden für Viehställe, der aus einer Vielzahl von hohlen, rechteckigen Plattenkörpern zusammengesetzt ist, deren Hohlräume mit einem Wärmeträgerfluid, insbesondere mit Wasser befüllt sind und mittels durch die Hohlräume verlaufender Heizleitungen beheizbar sind, wobei jeder Plattenkörper jeweils eine die Standfläche für das Vieh bildende, mit einer Einfüllöffnung versehene Oberschale und eine die Oberschale abstützende Unterschale aufweist, die an ihren Rändern flüssigkeitsdicht miteinander verbunden sind und mit Mitteln zum Einhängen in Träger versehen sind und in ihrem Flächenbereich durch Stützen aneinander abgestützt sind, die durch den Hohlraum verlaufen.

Ein solcher beheizbarer Boden für Viehställe ist beispielsweise aus der DE 20 2007 009 508 U1 bekannt.

Ein Problem bei diesen beheizbaren Böden besteht darin, die Hohlräume der Plattenkörper blasenfrei mit dem Wärmeträgerfluid, d. h. also in der Regel mit Wasser zu befüllen. Diese Schwierigkeit ergibt sich insbesondere dann, wenn in dem Hohlraum des Plattenkörpers zur Steigerung der Stabilität Stützen mit großer Tragkraft angeordnet werden müssen.

Bei dem vorbekannten Boden ist versucht worden, das oben angegebene Problem dadurch zu lösen, dass die Oberseiten der Oberschalen der Plattenkörper pyramidenförmig ausgebildet sind und die Einfüllöffnungen im Bereich der Pyramidenspitzen angeordnet sind. Hierdurch soll erreicht werden, dass die sich beim Befüllen in den Hohlräumen bildenden Luftblasen entlang der schrägen Pyramidenflächen zu den an den Pyramidenspitzen befindlichen Einfüllöffnungen aufsteigen. Dies gelingt allerdings nur, wenn die Pyramidenflächen einen verhältnismäßig steilen Neigungswinkel haben und wenn entlang dem Wanderweg der Luftblasen keine Hohlräume oder Taschen angeordnet sind, in denen die Luftblasen hängen bleiben können. Um eine solche Taschenbildung zu vermeiden, werden bei den vorbekannten Plattenkörpern als Stützen zwischen Oberschale und Unterschale ausschließlich flache, grade Stege verwendet, die natürlich nur verhältnismäßig geringe Kräfte aufnehmen und zwischen Oberschale und Unterschale übertragen können.

Es ist deshalb Aufgabe der Erfindung, den beheizbaren Boden der eingangs genannten Art im Hinblick auf seine Stabilität zu verbessern und zugleich eine blasenfreie Befüllung sicherzustellen.

Zur Lösung dieser Aufgabe schlägt die Erfindung ausgehend von dem beheizbaren Boden der eingangs genannten Art vor, dass die Stützen zumindest im von unten an die Oberschale angrenzenden Bereich von seitlich offenen Rohrstutzen mit rundem oder eckigem Querschnitt gebildet werden, deren seitliche Öffnungen alle in Richtung auf die an einem Rand der Oberschale befindliche Einfüllöffnung ausgerichtet sind.

Die beim beheizbaren Boden gemäß der Erfindung verwendeten hohlen Plattenkörper sind aufgrund der Verwendung von Rohrstutzen als Stützen zwischen Oberschale und Unterschale extrem stabil und tragfähig. Solche zylindrischen oder prismatischen Rohrstutzen haben - auch wenn sie mit einer seitlichen Öffnung versehen sind - bei gleichem Materialaufwand eine erheblich größere Tragfähigkeit, als schmale, grade Stege. Dadurch, dass alle seitlichen Öffnungen der rohrstutzenförmigen Stützen in Richtung auf eine am Rand der Oberschale befindliche Einfüllöffnung ausgerichtet sind, gelingt eine blasenfreie Befüllung des Hohlraums des Plattenkörpers dadurch, dass der Plattenkörper beim Befüllen derart schräg gestellt wird, dass sich die Einfüllöffnung am höchsten Punkt des Hohlraums befindet. Aufgrund der besonderen Ausgestaltung der Stützen steigen bei schräg gestelltem Plattenkörper alle den Hohlraum nach oben begrenzenden Flächen zu der Einfüllöffnung hin an, so dass die Blasen in diese Richtung aufsteigen, derart, dass die Luft am Einfüllstutzen austreten kann.

Vorzugsweise sind die Einfüllöffnungen der Plattenkörper jeweils in einer Ecke der Oberschale angeordnet. Eine solche in einer Ecke der Oberschale des Plattenkörpers befindliche Einfüllöffnung kann besonders leicht durch entsprechendes Schrägstellen des Plattenkörpers an dem höchsten Punkt positioniert werden.

Eine besonders bevorzugte Ausführungsform der Erfindung sieht vor, dass die Stützen jeweils zweiteilig ausgebildet sind und aus Stützenunterteilen bestehen, die einstückig mit der Unterschale verbunden sind, sowie aus Stützenoberteilen, die einstückig mit der Oberschale verbunden sind. Diese zweiteilige Ausbildung der Stützen hat insbesondere fertigungstechnische Vorteile. Auf diese Weise können nämlich sowohl die Oberschale als auch die Unterschale einfach als Spritzgussteile hergestellt werden, die anschließend stoffschlüssig, beispielsweise durch ein Spiegelschweißverfahren miteinander verbunden werden.

Um eine besondere Steifigkeit und Stabilität der Unterschale zu erzielen, ist vorgesehen, dass die Unterschale mit quer zu ihren Längsseiten verlaufenden Versteifungsrippen versehen sind, an die die Stützenunterteile angeformt sind. Durch diese konstruktive Ausgestaltung gelingt es besonders gut, mit der steifen Unterschale die vom Vieh belastete Oberschale entsprechend zu unterstützen.

Weiterhin ist vorgesehen, dass die Versteifungsrippen der Unterschale mit Auflagesätteln für die Heizleitung versehen sind. Auf diese Weise ist es besonders einfach möglich, die Heizleitung, die beispielsweise ein von heißem Wasser durchströmtes Rohr oder ein elektrisch beheiztes Rohr in der Mitte des Hohlraumes des Plattenkörpers zu fixieren. Auf diese Weise erhalten die Versteifungsrippen gewisssermaßen eine Doppelfunktion, einerseits zum Versteifen und andererseits zum Halten der Heizleitung etwa in der Mitte des Hohlraums.

Um die Wärmeableitung nach unten zu unterbinden, ist weiterhin vorgesehen, dass unterhalb der Unterschale eine Wärmedämmplatte angeordnet ist. Diese Wärmedämmplatte besteht beispielsweise aus Schaumstoff oder einem anderen entsprechend wärmedämmenden Material und wird dadurch gegen Beschädigungen geschützt, dass sie nach unten von einer Abdeckplatte abgedeckt ist, die durch Schlagdübel mit der Unterschale verbunden ist. An der Unterseite der Unterschale sind zweckmäßig weiterhin Schraubanschlüsse des Heizleiters angeordnet, die durch die Wärmedämmplatte und die Abdeckplatte hindurchragen.

Damit diese Schraubanschlüsse beim Stapeln der Plattenkörper zum Zwecke des Transportes nicht stören, ist weiterhin vorgesehen, dass die Abdeckplatte und die Wärmedämmplatte zusätzlich mit Ausnehmungen versehen sind, in die beim Stapeln der Plattenkörper die überstehenden Schraubanschlüsse eines angrenzenden, um 180° verdrehten Plattenkörpers passen. Auf diese Weise ist es möglich, dass Packmaß der Plattenkörper bei deren Transport und Auslieferung erheblich zu reduzieren.

Weiterhin ist vorgesehen, dass die Seitenkanten der Plattenkörper mit Hakenleisten versehen sind, die in Träger einhängbar sind. Diese Hakenleisten, die als separate Spritzgussteile ausgebildet sind, werden zweckmäßig im Bereich der steifen Unterschale an dem Plattenkörper befestigt und ermöglichen zusammen mit der steifen Unterschale eine sehr stabile Befestigung der Platte an den Trägem des Unterbaus.

Schließlich ist vorgesehen, dass die Oberseite der Oberschale mit einer abwechselnden Grob- und Feinprofilierung versehen ist, die den auf dem beheizbaren Boden stehenden Vieh guten Halt gibt. Außerdem ist am Rand der Oberseite der Oberschale eine Tropfkante vorgesehen, die das Herabtropfen von Flüssigkeit verhindern soll.

Ein Ausführungsbeispiel der Erfindung wird im folgenden anhand der Zeichnung näher erläutert. Es zeigen:
- Fig. 1:: Die Teile eines Plattenkörpers gemäß der Erfindung in einer Explosionsdarstellung von schräg oben;
- Fig. 2:: die Teile eines Plattenkörpers gemäß der Erfindung in einer Explosionsdarstellung von schräg unten;

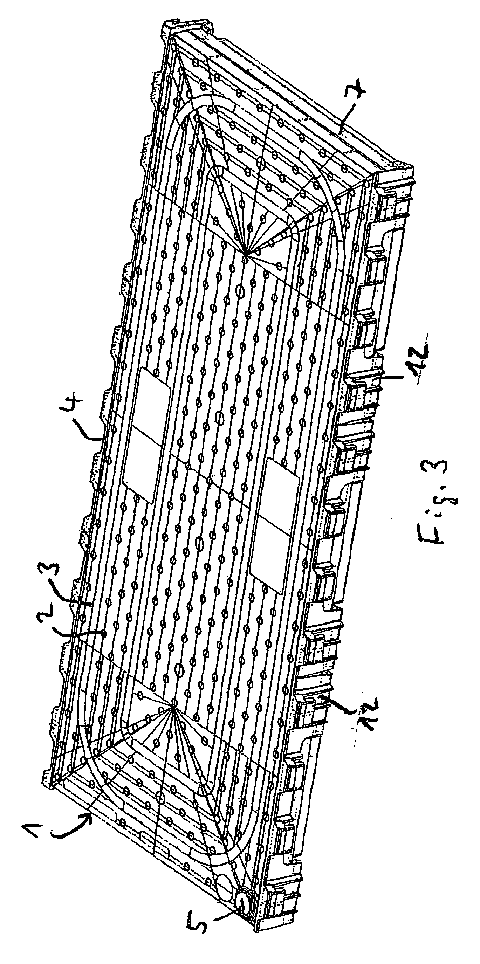

- Fig. 3:: perspektivisch den Plattenkörper gemäß der Erfindung im fertig montierten Zustand von oben;

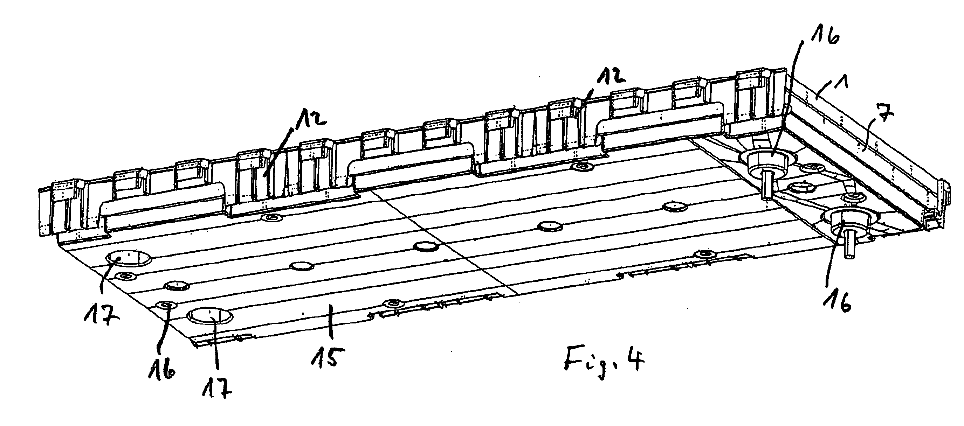

- Fig. 4:: perspektivisch den fertig montierten Plattenkörper gemäß der Erfindung von unten;

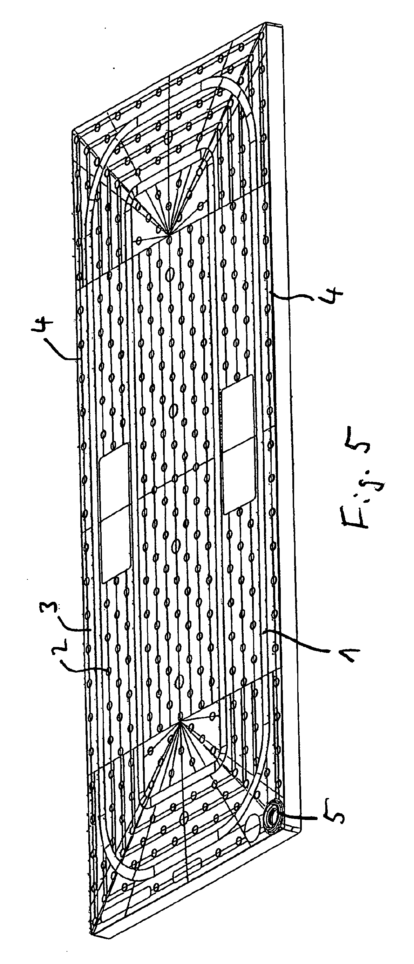

- Fig. 5:: perspektivisch die Oberschale von oben;
- Fig. 6:: die Oberschale von unten;

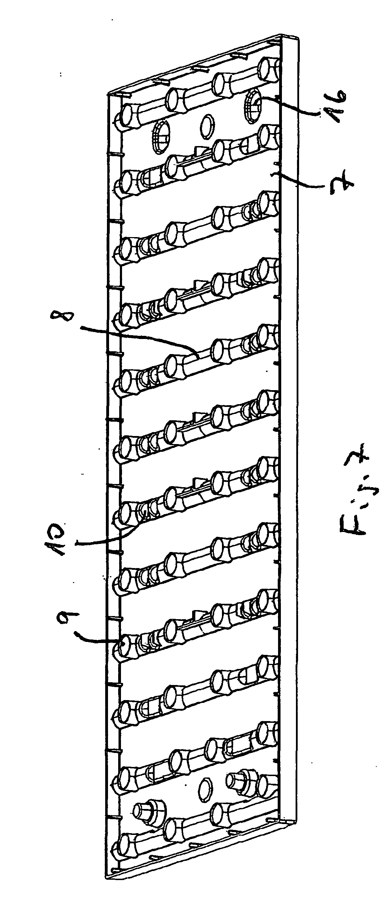

- Fig. 7:: perspektivisch die Unterschale von oben;

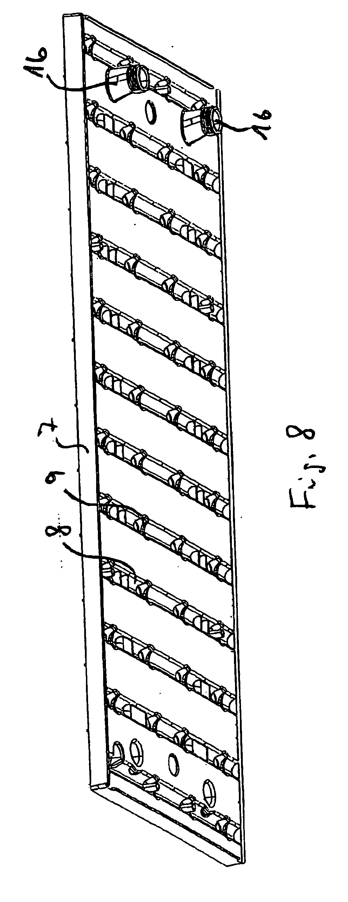

- Fig. 8:: perspektivisch die Unterschale von unten;

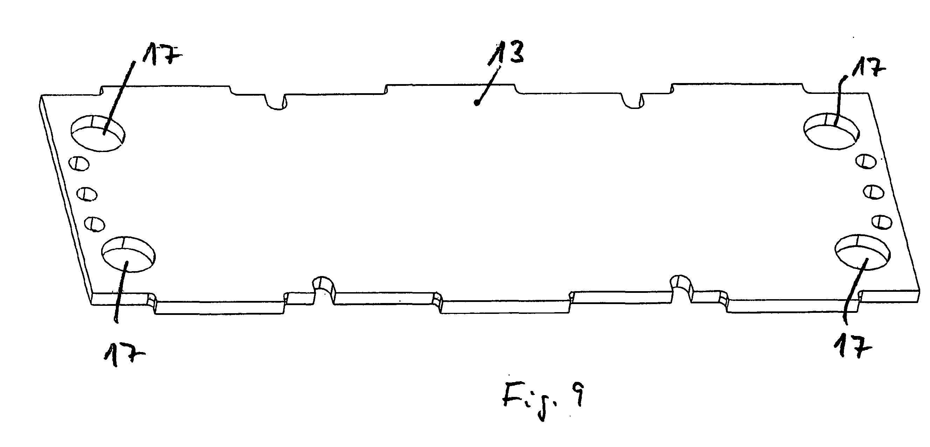

- Fig. 9:: perspektivisch die Wärmedämmplatte von oben;

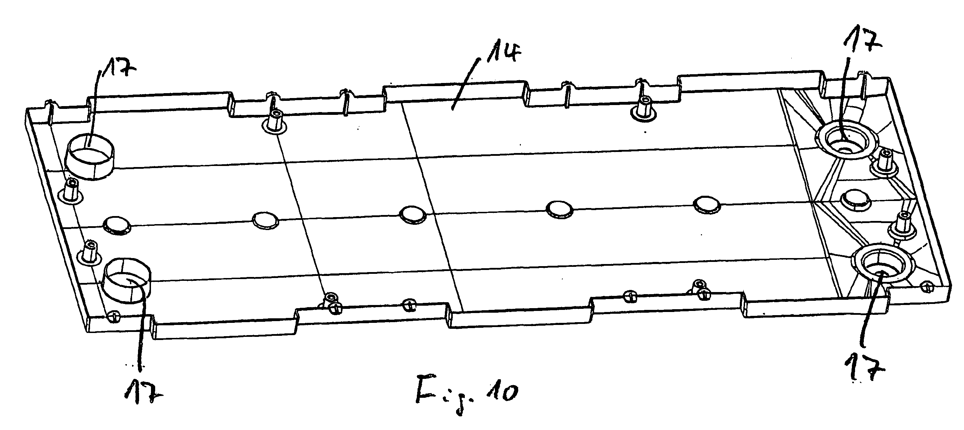

- Fig. 10:: perspektivisch die Abdeckplatte von oben;

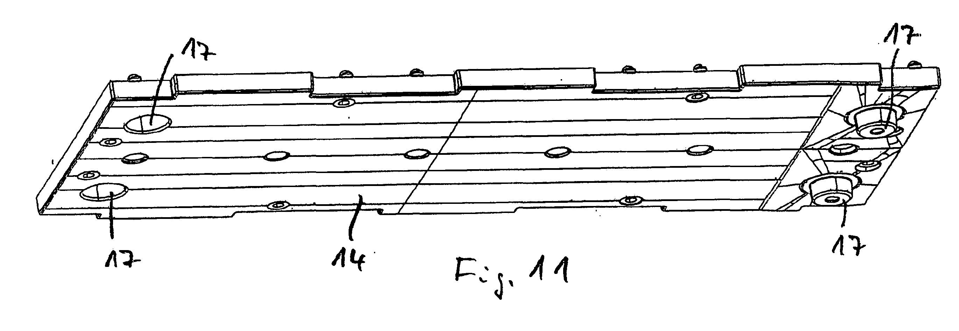

- Fig. 11:: perspektivisch die Abdeckplatte von unten.

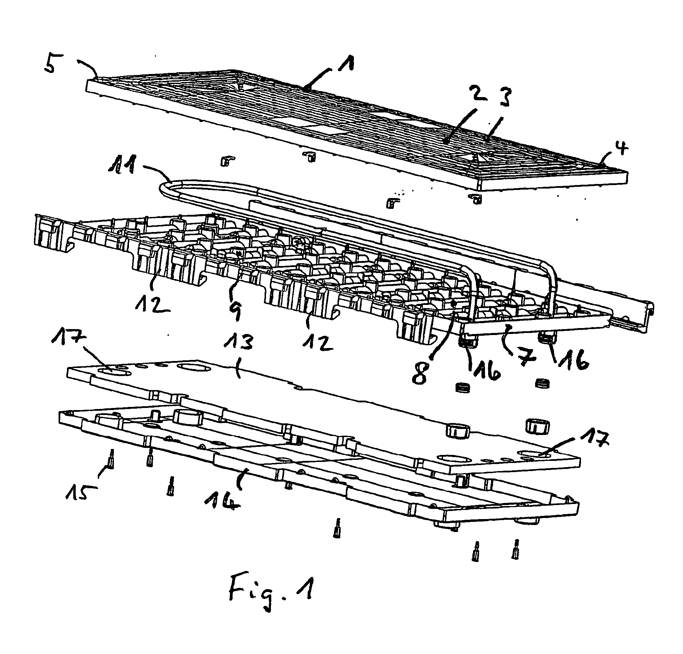

In Figur 1 ist die Oberschale des Plattenkörpers mit dem Bezugszeichen 1 bezeichnet. Diese Oberschale 1 ist an ihrer Oberseite mit einer abwechselnden Fein- und Grobprofilierung 2, 3 versehen, die dem auf dem Boden stehenden Vieh einen guten Halt geben soll. Außerdem ist die Oberschale 1 mit einer umlaufenden Tropfkante 4 versehen, die das Herabtropfen von Fluiden vermeiden soll. Solche Fluide würden an die Unterseite des Plattenkörpers gelangen und dort verdunsten und unerwünschte Ablagerungen hinterlassen.

Ebenso könnten die herabtropfenden Fluide in die Isolierung des Plattenkörpers eindringen, die weiter unten noch erläutert wird.

Weiterhin ist die Oberschale 1 an der linken oberen Ecke mit einer Einfüllöffnung 5 versehen, über die der Hohlraum des Plattenkörpers mit Wärmefluid, z. B. Wasser befüllt werden kann, wie weiter unten noch erläutert werden wird. Der Einfüllstutzen 5 verfügt neben der eigentlichen Einlassöffnung über konzentrisch um die Einlassöffnung herum gruppierte Entlüftungsbohrungen, um die beim Befüllen verdrängte Luft entweichen zu lassen.

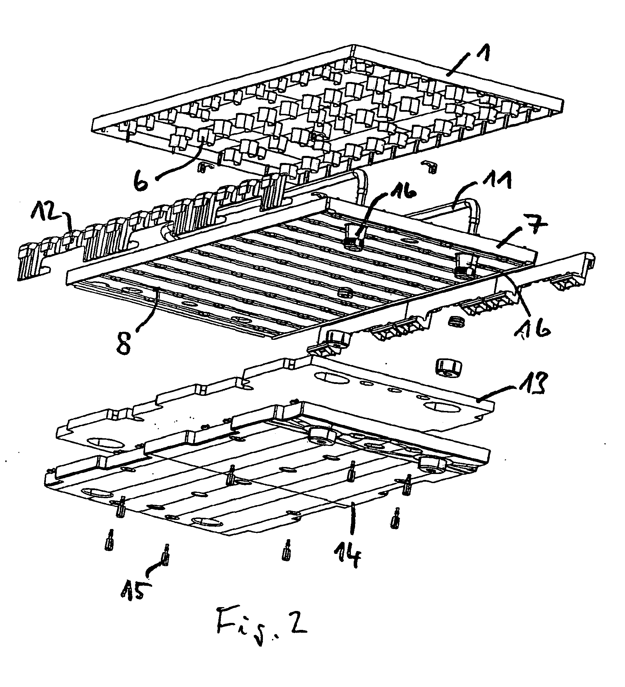

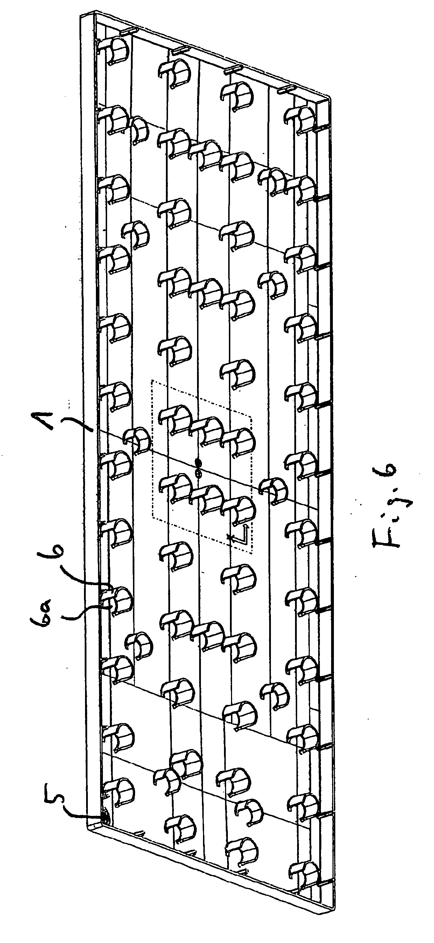

An ihrer Unterseite (vgl. Figuren 2 und 6) ist die Oberschale 1 mit einer Vielzahl von Stützenoberteilen 6 in Form von seitlich offenen Rohrstutzen versehen, die jeweils seitlich eine Öffnung 6a aufweisen, die alle in Richtung auf die Einfüllöffnung 5 ausgerichtet sind.

Diese Stützenoberteile 6 stützen die Fläche der Oberschale 1 großflächig ab und stellen eine blasenfreie Belüftung sicher, wie weiter unten noch erläutert werden wird.

Unterhalb der Oberschale 1 ist eine Unterschale 7 angeordnet, die mit quer zu ihrer Längsrichtung verlaufenden Versteifungsrippen 8 versehen ist. An diese Versteifungsrippen 8 sind Stützenunterteile 9 angeformt, die ebenso wie die Stützenoberteile 6 rohrstutzenförmig ausgebildet sind und beim Verschweißen von Oberschale 1 und Unterschale 7 mit den Stützenoberteilen 6 verschweißt werden. Diese Schweißverbindung zwischen Oberschale 1 und Unterschale 7 wird zweckmäßig im Spiegelschweißverfahren hergestellt.

Die Versteifungsrippen 8 der Unterschale 7 sind weiterhin mit Auflagesätteln 10 für eine Heizleitung 11 versehen, die hier als Rohrbogen ausgebildet ist, der von heißem Wasser oder Dampf durchströmt wird. Die Heizleitung 11 wird von den Auflagesätteln 10 der Versteifungsrippen 8 etwa in der Mitte des Hohlraumes des fertig montierten Plattenkörpers gehalten.

An den Längsseiten der Unterschale 7 sind Hakenleisten 12 befestigt, die einerseits zur Versteifung der Ränder des Plattenkörpers dienen und zum anderen zum Einhängen des Plattenkörpers in Träger des Unterbaus verwendet werden.

Unterhalb der Unterschale 7 befindet sich eine Wärmedämmplatte 13, die aus Schaumstoff oder einem ähnlichen geeigneten Wärme dämmenden Stoff besteht. Um diese Wärmedämmplatte 13 gegen Beschädigungen zu schützen, ist sie nach unten hin von einer Abdeckplatte 14 abgedeckt, die Durchschlagdübel 15 mit der Unterschale 7 verbunden ist.

Die Unterschale 7 ist weiterhin mit Schraubanschlüssen 16 für die Heizleitung 11 versehen, die durch die Wärmedämmplatte 13 und die Abdeckplatte 14 hindurchragen. Damit diese nach unten über die Abdeckplatte 14 vorstehenden Schraubanschlüsse 16 beim Stapeln der Plattenkörper nicht stören, sind die Wärmedämmplatte 13 und die Abdeckplatte 14 mit Ausnehmungen 17 versehen, in die beim Stapeln der Plattenkörper die überstehenden Schraubanschlüsse 16 eines angrenzenden, um 180° verdrehten Plattenkörpers passen.

Zum Befüllen des fertig montierten Plattenkörpers wird dieser derart schräg gestellt, dass sich die Einfüllöffnung 5 am höchsten Punkt befindet. Sodann wird über die Einfüllöffnung 5 das Wärmeträgerfluid, z. B. Wasser, eingefüllt. Dabei füllt sich der Hohlraum der Platte von unten nach oben aufsteigend mit Wasser und verdrängt die in dem Körper befindliche Luft. Dadurch, dass die seitlichen Öffnungen der rohrstutzenförmigen Stützenoberteile 6 alle in Richtung auf die Einfüllöffnung offen sind, entstehen im Hohlraum des Plattenkörpers keine Taschen, in denen die aufsteigende Luft zurückgehalten werden könnte. Das Wärmeträgerfluid (Wasser) verteilt sich vielmehr großflächig und gleichmäßig über die Unterseite der Oberschale 1, so dass diese sehr gleichmäßig beheizt wird und zugleich von den rohrstutzenförmigen Stützenoberteilen 6 gleichmäßig und großflächig abgestützt wird. Die Abstützkräfte werden gleichmäßig in die Unterschale 7 und über die steife Konstruktion der Unterschale 7 an die Hakenleisten 12 und die Träger eingeleitet.

## Patentansprüche

1. Beheizbarer Boden für Viehställe, der aus einer Vielzahl von hohlen, rechteckigen Plattenkörpern zusammengesetzt ist, deren Hohlräume mit einem Wärmeträgerfluid, insbesondere mit Wasser befüllt sind und mittels durch diese Hohlräume verlaufender Heizleitungen beheizbar sind, wobei jeder Plattenkörper jeweils eine die Standfläche für das Vieh bildende, mit einer Einfüllöffnung (5) versehene Oberschale (1) und eine die Oberschale (1) abstützende Unterschale (7) aufweist, die an ihren Rändern flüssigkeitsdicht miteinander verbunden und mit Mitteln zum Einhängen in Träger versehen sind und in ihrem Flächenbereich durch Stützen aneinander abgestützt sind, die durch den Hohlraum verlaufen,
**dadurch gekennzeichnet, dass** die Stützen (6, 9) zumindest im von unten an die Oberschale (1) angrenzenden Bereich von seitlich offenen Rohrstutzen mit rundem oder eckigem Querschnitt gebildet werden, deren seitliche Öffnungen (6a) alle in Richtung auf die an einem Rand der Oberschale (1) befindliche Einfüllöffnung (5) ausgerichtet sind.

2. Boden nach Anspruch 1, **dadurch gekennzeichnet, dass** die Einfüllöffnungen (5) der Plattenkörpern (1, 7) jeweils in einer Ecke der Oberschalen (1) angeordnet sind.

3. Boden nach Anspruch 1, **dadurch gekennzeichnet, dass** die Stützen (6, 9) jeweils zweiteilig ausgebildet sind und aus Stützenunterteilen (9) bestehen, die einstückig mit der Unterschale (7) verbunden sind, sowie aus Stützenoberteilen (6), die einstückig mit der Oberschale (1) verbunden sind.

4. Boden nach Anspruch 1, **dadurch gekennzeichnet, dass** die Unterschale (7) mit quer zu ihren Längskanten verlaufenden Versteifungsrippen (8) versehen ist, an die die Stützenunterteile (9) angeformt sind.

5. Boden nach Anspruch 1, **dadurch gekennzeichnet, dass** die Versteifungsrippen (8) der Unterschale (7) mit Auflagesätteln (10) für die Heizleitung (11) versehen sind.

6. Boden nach Anspruch 1, **dadurch gekennzeichnet, dass** unterhalb der Unterschale (7) eine Wärmedämmplatte (13) angeordnet ist.

7. Boden nach Anspruch 6, **dadurch gekennzeichnet, dass** die Wärmedämmplatte (13) nach unten von einer Abdeckplatte (14) abgedeckt ist, die durch Schlagdübel (15) mit der Unterschale (7) verbunden ist.

8. Boden nach den Ansprüche 6 und 7, **dadurch gekennzeichnet, dass** an der Unterseite der Unterschale (7) Schraubanschlüsse (16) der Heizleitung (11) angeordnet sind, die durch die Wärmedämmplatte (13) und die Abdeckplatte (14) hindurchragen.

9. Boden nach Anspruch 8, **dadurch gekennzeichnet, dass** die Abdeckplatte (14) und die Wärmedämmplatte (13) zusätzlich mit Ausnehmungen (17) versehen sind, in die beim Stapeln der Plattenkörper die überstehenden Schraubanschlüsse (16) eines angrenzenden und um 180° verdrehten Plattenkörpers passen.

10. Boden nach Anspruch 1, **dadurch gekennzeichnet, dass** die Seitenkanten des Plattenkörpers mit Hakenleisten (12) verbunden sind, die in Träger einhängbar sind.

11. Boden nach Anspruch 10, **dadurch gekennzeichnet, dass** die Hakenleisten (12) im Bereich der Unterschale (7) formschlüssig an dem Plattenkörper befestigt sind.

12. Boden nach Anspruch 1, **dadurch gekennzeichnet, dass** die Oberseiten der Oberschalen (1) mit einer kombinierten Grob- und Feinprofilierung (2, 3) sowie mit einer Tropfkante (4) versehen ist.

## Claims

1. Heatable floor for livestock stalls, which is composed of a plurality of hollow, rectangular plate bodies, whose cavities are filled with a heat carrier fluid, in particular with water, and heatable by means of heating lines that run through these cavities, wherein each plate body has, respectively, an upper shell (1) forming the standing surface for the livestock, provided with a filling opening (5), and a lower shell (7) supporting the upper shell (1), which are connected to one another at their edges in fluid-tight manner, and are provided with means for suspension in carriers, and are supported on one another in their surface region by supports that run through the cavity,
**characterized in that**
the supports (6, 9) are formed, at least in the region that borders on the upper shell (1) from below, by pipe sockets open to the side with round or angular cross-section, whose lateral openings (6a) are all oriented in the direction of the filling opening (5) situated at an edge of the upper shell (1).

2. Floor according to claim 1, **characterized in that** the filling openings (5) of the plate bodies (1, 7) are each arranged in a corner of the upper shells (1).

3. Floor according to claim 1, **characterized in that** the supports (6, 9) are each formed in two parts and consist of lower support parts (9) which are connected in one piece to the lower shell (7), as well as upper support parts (6) which are connected in one piece to the upper shell (1).

4. Floor according to claim 1, **characterized in that** the lower shell (7) is provided with reinforcement ribs (8) that run transverse to its longitudinal edges, upon which are formed the lower support parts (9).

5. Floor according to claim 1, **characterized in that** the reinforcement ribs (8) of the lower shell (7) are provided with bearing saddles (10) for the heating line (11).

6. Floor according to claim 1, **characterized in that** a heat insulation plate (13) is arranged underneath the lower shell (7).

7. Floor according to claim 6, **characterized in that** the heat insulation plate (13) is covered, from below, by a cover plate (14) that is connected to the lower shell (7) by impact dowels (15).

8. Floor according to claims 6 and 7, **characterized in that** on the underside of the lower shell (7) screw connectors (16) are arranged at the heating line (11) which project through the heat insulation plate (13) and the cover plate (14).

9. Floor according to claim 8, **characterized in that** the cover plate (14) and the heat insulation plate (13) are additionally provided with recesses (17) into which the projecting screw connectors (16) of an adjacent plate body, rotated by 180°, fit when the plate bodies are stacked.

10. Floor according to claim 1, **characterized in that** the side edges of the plate body are connected to hook strips (12) that can be suspended in carriers.

11. Floor according to claim 10, **characterized in that** the hook strips (12) are attached to the plate body, with positive fit, in the region of the lower shell (7).

12. Floor according to claim 1, **characterized in that** the tops of the upper shells (1) are provided with a combined coarse and fine profiling (2, 3) as well as with a drip edge (4).

## Revendications

1. Fond chauffable pour étables, qui est composé d'une pluralité de corps de plaque rectangulaires creux, dont les cavités sont remplies avec un fluide caloporteur, notamment avec de l'eau, et qui sont chauffables au moyen de conduites de chauffage traversant ces cavités, chaque corps de plaque comprenant à chaque fois une enveloppe supérieure (1) munie d'une ouverture de remplissage (5), qui forme la plateforme pour le bétail, et une enveloppe inférieure (7) supportant l'enveloppe supérieure (1), qui sont reliées l'une à l'autre d'une manière étanche aux liquides sur leurs bords et qui sont munies de moyens pour l'accrochage à des supports et qui sont maintenues l'une contre l'autre au niveau de la zone de leur surface par des appuis, qui traversent la cavité,
**caractérisé en ce que** les appuis (6, 9) sont formés au moins dans la zone avoisinant l'enveloppe supérieur (1) par le bas par des appuis tubulaires ouverts latéralement à section ronde ou anguleuse, dont les ouvertures latérales (6a) sont toutes alignées dans la direction de l'ouverture de remplissage (5) se trouvant sur un bord de l'enveloppe supérieure (1).

2. Fond selon la revendication 1, **caractérisé en ce que** les ouvertures de remplissage (5) des corps de plaque (1, 7) sont à chaque fois agencées dans un angle des enveloppes supérieures (1).

3. Fond selon la revendication 1, **caractérisé en ce que** les appuis (6, 9) sont à chaque fois formés en deux parties et constitués de parties inférieures d'appui (9), qui sont reliées d'un seul tenant avec l'enveloppe inférieure (7), et de parties supérieures d'appui (6), qui sont reliées d'un seul tenant avec l'enveloppe supérieure (1).

4. Fond selon la revendication 1, **caractérisé en ce que** l'enveloppe inférieure (7) est munie de nervures de renforcement (8) perpendiculaires à ses bords longitudinaux, sur lesquelles les parties inférieures d'appui (9) sont moulées.

5. Fond selon la revendication 1, **caractérisé en ce que** les nervures de renforcement (8) de l'enveloppe inférieure (7) sont munies de selles supports (10) pour la conduite de chauffage (11).

6. Fond selon la revendication 1, **caractérisé en ce qu'**une plaque isolante thermique (13) est agencée en dessous de l'enveloppe inférieure (7).

7. Fond selon la revendication 6, **caractérisé en ce que** la plaque isolante thermique (13) est recouverte en bas par une plaque de recouvrement (14), qui est reliée par des chevilles à clou (15) avec l'enveloppe inférieure (7).

8. Fond selon les revendications 6 et 7, **caractérisé en ce que** des bornes de vis (16) de la conduite de chauffage (11), qui traversent la plaque isolante thermique (13) et la plaque de recouvrement (14), sont agencées sur le côté inférieur de l'enveloppe inférieure (7).

9. Fond selon la revendication 8, **caractérisé en ce que** la plaque de recouvrement (14) et la plaque isolante thermique (13) sont également munies de creux (17), dans lesquels les bornes de vis (16) dépassant d'un corps de plaque adjacent et tourné à 180° passent lors de l'empilement des corps de plaque.

10. Fond selon la revendication 1, **caractérisé en ce que** les bords latéraux du corps de plaque sont reliés avec des baguettes à crochets (12), qui peuvent être accrochées à des supports.

11. Fond selon la revendication 10, **caractérisé en ce que** les baguettes à crochets (12) sont fixées par complémentarité de forme sur le corps de plaque dans la zone de l'enveloppe inférieure (7).

12. Fond selon la revendication 1, **caractérisé en ce que** les côtés supérieurs des enveloppes supérieures (1) sont munis d'un profilage grossier et fin combiné (2, 3), ainsi que d'un larmier (4).
